# EUROPÄISCHE PATENTSCHRIFT

(11) **EP 1 954 701 B1**
(45) Veröffentlichungstag und Bekanntmachung des Hinweises auf die Patenterteilung: **18.03.2009**
(21) Anmeldenummer: 06830080.5
(22) Anmeldetag: 22.11.2006
(51) Int. Cl.: C07F 7/18, C07F 7/08

(54) **VERFAHREN ZUR HERSTELLUNG UNGESÄTTIGTER ORGANOSILICIUMVERBINDUNGEN**
PROCESS FOR PREPARING UNSATURATED ORGANOSILICON COMPOUNDS
PROCÉDÉ DE PRÉPARATION DE COMPOSÉS D'ORGANOSILICIUM INSATURÉS

(30) Priorität: 01.12.2005 DE 102005057459
(43) Veröffentlichungstag der Anmeldung: 13.08.2008
(73) Patentinhaber: Wacker Chemie AG, 81737 München (DE)
(72) Erfinder: BAUER, Andreas, 84359 Simbach (DE); PFEIFFER, Jürgen, 84489 Burghausen (DE)
(74) Vertreter: Gössmann, Christoph Tassilo
(86) Internationale Anmeldenummer: PCT/EP2006/068743
(87) Internationale Veröffentlichungsnummer: WO 2007/063011

(56) Entgegenhaltungen:
- EP-A- 1 249 454
- EP-A2- 1 234 830
- DE-B3- 10 308 579

## Beschreibung

Die Erfindung betrifft ein Verfahren zur Herstellung ungesättigter, carbonyloxyorganische Gruppen aufweisender Organosiliciumverbindungen in Anwesenheit von tertiären Phosphinen.

Siliciumverbindungen mit ungesättigten organischen Carbonyloxy-Funktionen wie z.B. 3-Methacryloxypropyltrimethoxysilan finden weitverbreitete Anwendung als Haftvermittler zwischen anorganischen und organischen Materialien, so z.B. in Schlichten für Glasfasern oder auch als Quervernetzer in organischen Polymeren.
Verschiedene Verfahren zur Herstellung derartiger Verbindungen sind bekannt. So beschreibt u.a. DE 2851456 C2 die Hydrosilylierung von SiH-Bindungen enthaltenden Chlorsilanen mit ungesättigten organischen Molekülen wie Allylmethacrylat unter Metallkatalyse zu entsprechend ungesättigt organisch funktionalisierten Chlorsilanen. Der Nachteil bei diesem Verfahren ist die Tatsache, dass der nachfolgende, zum Erhalt der entsprechend Alkoxy-funktionalisierten Silane notwendige Alkoholyseschritt aufgrund der hohen Polymerisationsneigung der ungesättigten organischen Funktionalität in den meisten Fällen nicht kontinuierlich durchgeführt werden kann.
Neben diesem Verfahren ist, z.B. aus DE 38 32 621 C1, auch die direkte Reaktion eines SiH-Bindungen enthaltenden Alkoxysilans mit ungesättigten organischen Molekülen unter Metallkatalyse bekannt. Dieses Verfahren besitzt jedoch den großen Nachteil, dass die zur Durchführung notwendigen, zum Teil hochtoxischen und zur Zersetzung neigenden Alkoxysilane besondere Sicherheitsrisiken in sich bergen.
Bei den u.a. in EP 242 627 A2 und EP 437 653 B1 beschriebenen Verfahren werden dagegen die beschriebenen Verbindungen durch nukleophile Substitutionsreaktion zwischen einem Metall- oder Ammoniumsalz einer ungesättigten organischen Säure und einem halogenorganofunktionalisierten Silan erhalten. Dabei wird das Salz der ungesättigten organischen Säure auf verschiedenen Wegen gewonnen: Nach dem in EP 242 627 A2 beschriebenen Verfahren wird durch Reaktion der ungesättigten organischen Säure mit einem tertiären Amin das Ammoniumsalz gewonnen, welches sofort im gleichen Reaktionsgefäß mit der halogenorganischen Siliciumverbindung umgesetzt werden kann. Als nachteilig wirkt sich dabei jedoch die geringe Reaktivität der Ammoniumsalze der ungesättigten organischen Säuren aus, was zu sehr langen Reaktionszeiten und damit verbunden zu einer großen Gefahr der Polymerisation des Produktes führt. In EP 437 653 B1 werden zwei alternative Methoden beschrieben: Bei dem einen Verfahren wird das isolierte Natrium- oder Kalium-Salz der ungesättigten organischen Säure eingesetzt. Dies hat den Nachteil, dass dieses Salz erst in einem eigenen Prozess synthetisiert und aufwendig getrocknet werden muss. Daneben kann das Metallsalz der ungesättigten organischen Säure auch durch Umsetzung des entsprechenden Metallalkoholates in dem entsprechengen Alkohol durch Umsetzung mit der ungesättigten organischen Säure erhalten werden. Nach Zugabe der halogenorganofunktionalisierten Siliciumverbindung und destillativem Entfernen des Alkohols kann die Reaktion dann im gleichen Reaktionsgefäß erfolgen. Dieses Verfahren birgt den Nachteil in sich, dass die verwendeten Metallalkoholate i.a. korrosiv, hochreaktiv und sehr kostspielig sind und zusätzlich große Mengen des jeweiligen, teils toxischen Alkohols als Solvens benötigt werden, was die Attraktivität dieses Verfahrens deutlich verringert. In EP 1 249 454 A1 wird ein Verfahren zur Herstellung ungesättigter, carbonyloxyorganische Gruppen aufweisender Organosiliciumverbindungen in Anwesenheit von Phosphoniumsalzen als Phasentransferkatalysatoren beschrieben. Der Nachteil an diesem Verfahren ist, dass die eingesetzten Katalysatoren sehr kostspielig und zumeist Feststoffe sind, was deren Dosierung erheblich erschwert.

Bei der Suche nach einem kostengünstigeren Verfahren wurde überraschenderweise gefunden, dass sich tertiäre Phosphine unter den Reaktionsbedingungen als extrem effiziente PhasentransferKatalysatoren erwiesen. Diese Verbindungen sind deutlich kostengünstiger als deren korrespondierende Phosphoniumsalze und zudem meist flüssig, was die Umsetzung des Verfahrens im technischen Maßstab beträchtlich erleichtert.

Gegenstand der Erfindung ist ein Verfahren zur Herstellung ungesättigter, carbonyloxyorganische Gruppen aufweisender Organosilane der allgemeinen Formel

(R¹O)₃₋ₙR²ₙSi-X-OC (O) C (R³) =CR³₂ (I),

wobei
R¹ gleich oder verschieden sein kann und einen einwertigen, gegebenenfalls substituierten Kohlenwasserstoffrest mit 1 bis 10. Kohlenstoffatomen, der mit Sauerstoffatomen unterbrochen sein kann, bedeutet,
R² gleich oder verschieden sein kann und einen einwertigen, SiC-gebundenen, gegebenenfalls substituierten Kohlenwasserstoffrest mit 1 bis 10 Kohlenstoffatomen, der mit Sauerstoffatomen unterbrochen sein kann, oder Sil(oxan)ylrest bedeutet, X einen zweiwertigen, gegebenenfalls substituierten Kohlenwasserstoffrest mit 1 bis 40 Kohlenstoffatomen, der mit Sauerstoffatomen unterbrochen sein kann, bedeutet,
R³ gleich oder verschieden sein kann und Wasserstoffatom oder einen einwertigen, gegebenenfalls substituierten Kohlenwasserstoffrest mit 1 bis 40 Kohlenstoffatomen, der mit Sauerstoffatomen unterbrochen sein kann, bedeutet und
n 0, 1, 2 oder 3 ist,
durch Umsetzung von halogenorganofunktionellen Siliciumverbindungen der Formel

(R¹O) ₃₋ₙR²ₙSi-X-Y (II),

wobei R¹, R², X und n die oben angegebenen Bedeutungen haben und Y ein Halogenatom darstellt,
mit Salz einer ungesättigten organischen Carbonsäure der Formel

M⁺ [⁻OC(O)C(R³)=CR³₂]ₒ (III),

wobei
R³ die obige Bedeutung hat, M Alkali- oder Erdalkalimetallatom bedeutet und o entsprechend der Wertigkeit von M 1 oder 2 sein kann,
in Anwesenheit von zumindest einem tertiären Phosphin der allgemeinen Formel IV

R⁴₃P (IV),

wobei
R⁴ gleich oder verschieden sein kann und einen einwertigen, gegebenenfalls substituierten Kohlenwasserstoffrest mit 1 bis 20 Kohlenstoffatomen, der mit Sauerstoffatomen und/oder Stickstoffatomen unterbrochen sein kann, bedeutet.

Beispiele für Reste R¹ sind die für Rest R³ angegebenen Reste mit 1 bis 10 Kohlenstoffatomen.

Bevorzugt handelt es sich bei R¹ um gegebenenfalls mit Stickstoff, Schwefel oder Phosphor substituierte Kohlenwasserstoffreste mit 1 bis 10 Kohlenstoffatomen, die mit Sauerstoffatomen unterbrochen sein können, besonders bevorzugt um den Methyl-, Ethyl-, 2-Methoxyethyl-, Phenyl- oder Isopropylrest, insbesondere um den Ethyl- oder Methylrest.

Beispiele für Rest R² sind die für Rest R³ angegebenen Reste mit 1 bis 10 Kohlenstoffatomen sowie Sil(oxan)ylreste der Formel (V) R₃Si-(OSiR₂)ₚ-, wobei R gleich oder verschieden sein kann und eine für R¹ angegebene Bedeutung hat, p 0 oder eine ganze Zahl von 1 bis 100 bedeutet, mit der Maßgabe, dass die Reste R sowohl direkt, also SiC-gebunden, als auch über Sauerstoff an das Siliciumatom gebunden sein können.

Bevorzugt handelt es sich bei Rest R² um gegebenenfalls mit Stickstoff, Schwefel oder Phosphor substituierte Kohlenwasserstoffreste mit 1 bis 10 Kohlenstoffatomen, die mit Sauerstoffatomen unterbrochen sein können, sowie um Sil(oxan)ylreste der Formel (V), besonders bevorzugt um den Phenyl-, Ethyl-, Methyl- oder Pentamethoxydisiloxylrest, insbesondere um den Methyl- oder den Ethylrest.

Beispiele für Rest X sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest; Hexylenreste, wie der n-Hexylenrest; Heptylenreste, wie der n-Heptylenrest; Octylenreste, wie der n-Octylenrest und iso-Octylenreste, wie der 2,2,4-Trimethylpentylenrest; Nonylenreste, wie der n-Nonylenrest; Decylenreste, wie der n-Decylenrest; Dodecylenreste, wie der n-Dodecylenrest; Octadecylenreste, wie der n-Octadecylenrest; Alkenylenreste, wie der Vinylen- und n-Propenylenrest; Arylenreste, wie der Phenylen-, Phenylmethylen-, Phenylethylen-, 1-Phenylpropylen- und der 2-Phenylpropylenrest, sowie (Poly)Alkylenoxygruppen der Formel (VI) -(CH₂)_{q}(OZ)ₘ-, wobei m eine ganze Zahl von 1 bis 100 ist, q eine ganze Zahl von 1 bis 6 ist und Z die Bedeutung von Ethylen-, n-Propylen-, Isopropylen-, n-Butylen- oder Isobutylenrest hat .

Bevorzugt handelt es sich bei X um zweiwertige, gegebenenfalls mit Stickstoff, Schwefel, oder Phosphor substituierte Kohlenwasserstoffreste mit 1 bis 10 Kohlenstoffatomen, die mit Sauerstoffatomen unterbrochen sein können, besonders bevorzugt um n-Propylen-, iso-Propylen-, n-Butylen-, iso-Butylen-, Methylen-, Ethylen- oder p-Phenylenreste, insbesondere um den Methylenoder den n-Propylenrest.

Beispiele für gegebenenfalls substituierte Kohlenwasserstoffrete R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-.Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest,-sowie Dialkylaminoalkylrest, wie der Dimethylaminomethyl-, der 2-Dimethylaminoethyl- und der 2-Dimethylaminopropylrest.

Bevorzugt handelt es sich bei Rest R³ um Wasserstoffatom oder gegebenenfalls mit Stickstoff, Schwefel oder Phosphor substituierte Kohlenwasserstoffreste mit 1 bis 10 Kohlenstoffatomen, die mit Sauerstoffatomen unterbrochen sein können, besonders bevorzugt um Wasserstoffatom, den Methyl- oder den Ethylrest, insbesondere um Wasserstoffatom oder den Methylrest.

Bevorzugt hat n die Bedeutung von 0 oder 1.

Bevorzugt hat Y die Bedeutung von Iod-, Brom- oder Chloratom, besonders bevorzugt Chloratom.

Beispiele für M sind Alkalimetallatome, wie Li, Na, K und Rb, sowie Erdalkalimetallatome, wie Mg, Ca, Sr und Ba.

Bevorzugt handelt es sich bei M um Natrium oder Kalium, insbesondere um Kalium.

Im Fall von M gleich Alkalimetallatom hat o in Formel (III) die Bedeutung von 1 und im Fall von M gleich Erdalkalimetallatom ist o gleich 2.

Beispiele für die nach dem erfindungsgemäßen Verfahren herstellbaren ungesättigten, carbonyloxyorganische Gruppen aufweisenden Organosilane der allgemeinen Formel (I) sind Acryloxymethyltrimethoxysilan, Acryloxymethyltriethoxysilan, Acryloxymethyltriphenoxysilan, Acryloxymethyltris(2-methoxyethöxy)silan, Acryloxymethyltriisopropoxysilan, Acryloxymethyl(dimethoxy)methylsilan, Acryloxymethyl(diethoxy)methylsilan, Acryloxymethyl(diphenoxy)methylsilan, Acryloxymethylbis(2-methoxyethoxy)methylsilan, Acryloxymethyl(diisopropoxy)methylsilan, Acryloxymethyl(dimethyl)methoxysilan, Acryloxymethyl(dimethyl)-ethoxysilan, Acryloxymethyl(dimethyl)phenoxysilan, Acryloxymethyl(dimethyl)(2-methoxyethoxy)silan, Acryloxymethyl(dimethyl)isopropoxysilan, Methacryloxymethyltrimethoxysilan, Methacryloxymethyltriethoxysilan, Methacryloxymethyltriphenoxysilan, Methacryloxymethyltris(2-methoxyethoxy)silan, Methacryloxymethyltriisopropoxysilan, Methacryloxymethyl(dimethoxy)methylsilan, Methacryloxymethyl(diethoxy)methylsilan, Methacryloxymethyl(diphenoxy)methylsilan, Methacryloxymethylbis(2-methoxyethoxy)methylsilan, Methacryloxymethyl(diisopropoxy)methylsilan, Methacryloxymethyl(dimethyl)methoxysilan, Methacryloxymethyl(dimethyl)ethoxysilan, Methacryloxymethyl(dimethyl)phenoxysilan, Methacryloxymethyl(dimethyl)(2-methoxyethoxy)silan, Methacryloxymethyl(dimethyl)isopropoxysilan, 3-Acryloxypropyltrimethoxysilan, 3-Acryloxypropyltriethoxysilan, 3-Acryloxypropyltriphenoxysilan, 3-Acryloxypropyltris(2-methoxyethoxy)silan, 3-Acryloxypropyltriisopropoxysilan, 3-Acryloxypropyl(dimethoxy)methylsilan, 3-Acryloxypropyl(diethoxy)methylsilan, 3-Acryloxypropyl(diphenoxy)methylsilan, 3-Acryloxypropylbis(2-methoxyethoxy)methylsilan, 3-Acryloxypropyl(diisopropoxy)methylsilan, 3-Acryloxypropyl(dimethyl)methoxysilan, 3-Acryloxypropyl(dimethyl)ethoxysilan, 3-Acryloxypropyl(dimethyl)phenoxysilan, 3-Acryloxypropyl(dimethyl)(2-methoxyethoxy)silan, 3-Acryloxypropyl(dimethyl)isopropoxysilan, 3-Methacryloxypropyltrimethoxysilan, 3-Methacryloxypropyltriethoxysilan, 3-Methacryloxypropyltriphenoxysilan, 3-Methacryloxypropyltris(2-methoxyethoxy)silan, 3-Methacryloxypropyltriisopropoxysilan, 3-Methacryloxypropyl(dimethoxy)methylsilan, 3-Methacryloxypropyl(diethoxy)methylsilan, 3-Methacryloxypropyl(diphenoxy)methylsilan, 3-Methacryloxypropylbis(2-methoxyethoxy)methylsilan, 3-Methacryloxypropyl(diisopropoxy)methylsilan, 3-Methacryloxypropyl(dimethyl)methoxysilan, 3-Methacryloxypropyl(dimethyl)ethoxysilan, 3-Methacryloxypropyl(dimethyl)-phenoxysilan, 3-Methacryloxypropyl(dimethyl)(2-methoxyethoxy)-silan und 3-Methacryloxypropyl(dimethyl)isopropoxysilan.

Beispiele für die im erfindungsgemäßen Verfahren eingesetzten halogenorganofunktionellen Siliciumverbindungen der Formel (II) sind Chlormethyltrimethoxysilan, Brommethyltrimethoxysilan, Chlormethyltriethoxysilan, Brommethyltriethoxysilan, Chlormethyltriphenoxysilan, Brommethyltriphenoxysilan, Chlormethyltris(2-methoxyethoxy)silan, Brommethyltris(2-methoxyethoxy)silan, Chlormethyltriisopropoxysilan, Brommethyltriisopropoxysilan, Chlormethyl(dimethoxy)methylsilan, Brommethyl(dimethoxy)-methylsilan, Chlormethyl(diethoxy)methylsilan, Brommethyl(diethoxy)methylsilan, Chlormethyl(diphenoxy)methylsilan, Brommethyl(diphenoxy)methylsilan, Chlormethylbis(2-methoxyethoxy)methylsilan, Brommethylbis(2-methoxyethoxy)methylsilan, Chlormethyl(diisopropoxy)methylsilan, Brommethyl(diisopropoxy)methylsilan, Chlormethyl(dimethyl)methoxysilan, Brommethyl(dimethyl)-methoxysilan, Chlormethyl(dimethyl)ethoxysilan, Brommethyl(dimethyl)ethoxysilan, Chlormethyl(dimethyl)phenoxysilan, Brommethyl(dimethyl)phenoxysilan, Chlormethyl(dimethyl)(2-methoxyethoxy) silan, Brommethyl (dimethyl) (2-methoxyethoxy) silan, Chlormethyl(dimethyl)isopropoxysilan, Brommethyl(dimethyl)isopropoxysilan, 3-Chlorpropyltrimethoxysilan, 3-Brompropyltrimethoxysilan, 3-Chlorpropyltriethoxysilan, 3-Brompropyltriethoxysilan, 3-Chlorpropyltriphenoxysilan, 3-Brompropyltriphenoxysilan, 3-Chlorpropyltris(2-methoxyethoxy)silan, 3-Brompropyltris(2-methoxyethoxy)silan, 3-Chlorpropyltriisopropoxysilan, 3-Brompropyltriisopropoxysilan, 3-Chlorpropyl(dimethoxy)methylsilan, 3-Brompropyl(dimethoxy)methylsilan, 3-Chlorpropyl(diethoxy)methylsilan, 3-Brompropyl(diethoxy)methylsilan, 3-Chlorpropyl(diphenoxy)methylsilan, 3-Brompropyl(diphenoxy)methylsilan, 3-Chlorpropylbis(2-methoxyethoxy)methylsilan, 3-Brompropylbis-(2-methoxyethoxy)methylsilan, 3-Chlorpropyl(diisopropoxy)methylsilan, 3-Brompropyl(diisopropoxy)methylsilan, 3-Chlorpropyl(dimethyl)methoxysilan, 3-Brompropyl(dimethyl)methoxysilan, 3-Chlorpropyl(dimethyl)ethoxysilan, 3-Brompropyl(dimethyl)ethoxysilan, 3-Chlorpropyl(dimethyl)phenoxysilan, 3-Brompropyl(dimethyl)phenoxysilan, 3-Chlorpropyl(dimethyl)(2-methoxyethoxy)-silan, 3-Brompropyl(dimethyl)(2-methoxyethoxy)silan, 3-Chlorpropyl(dimethyl)isopropoxysilan, 3-Brompropyl(dimethyl)isopropoxysilan.

Bevorzugt handelt es sich bei den erfindungsgemäß eingesetzten Siliciumverbindungen der Formel (II) um Chlormethyltrimethoxysilan, Chlormethyltriethoxysilan, Chlormethyl(dimethoxy)methylsilan, Chlormethyl(diethoxy)methylsilan, Chlormethyl(dimethyl)methoxysilan, Chlormethyl(dimethyl)ethoxysilan, 3-Chlorpropyltrimethoxysilan, 3-Chlorpropyltriethoxysilan, 3-Chlorpropyl(dimethoxy)methylsilan, 3-Chlorpropyl(diethoxy)methylsilan, 3Chlorpropyl(dimethyl)methoxysilan und 3-Chlorpropyl(dimethyl)ethoxysilan, wobei Chlormethyltrimethoxysilan, Chlormethyl(dimethoxy)methylsilan, 3-Chlorpropyltriethoxysilan, 3-Chlorpropyltrimethoxysilan und 3-Chlorpropyl(dimethoxy)methylsilan besonders bevorzugt sind.

Die im erfindungsgemäßen Verfahren eingesetzten halogenorganofunktionellen Siliciumverbindungen der Formel (II) sind handelsübliche Produkte bzw. nach in der Chemie gängigen Methoden herstellbar.

Beispiele für die im erfindungsgemäßen Verfahren eingesetzten Salze einer ungesättigten organischen Carbonsäure der Formel (III) sind Kaliumacrylat, Kaliummethacrylat, Natriumacrylat, Natriummethacrylat, *E*-But-2-ensäurekaliumsalz, *Z*-But-2-ensäurekaliumsalz, *E*-But-2-ensäurenatriumsalz, Z-But-2-ensäurenatriumsalz, *E*-2-Methyl-but-2-ensäurekaliumsalz, *Z*-2-Methyl-but-2-ensäurekaliumsalz, E-2-Methyl-but-2-ensäurenatriumsalz und Z-2-Methyl-but-2-ensäurenatriumsalz.

Die im erfindungsgemäßen Verfahren eingesetzten Salze der Formel (III) sind handelsübliche Produkte bzw. nach in der Chemie gängigen Methoden herstellbar.

Beispiele für gegebenenfalls substituierte Kohlenwasserstoffreste R⁴ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest;. Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; (gegebenenfalls substituierte) Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Vorzugsweise wird zumindest ein tertiäres Phosphin eingesetzt, es können jedoch auch beliebige Mischungen an verschiedenen tertiären Phosphinen eingesetzt werden. Insbesondere bevorzugte Beispiele für die im erfindungsgemäßen Verfahren eingesetzten tertiären Phosphine der allgemeinen Formel (IV) sind Tri-butylphosphin, Tri-octylphosphin oder Triphenylphosphin.

Die im erfindungsgemäßen Verfahren eingesetzten tertiären Phosphine der Formel (IV) sind handelsübliche Produkte bzw. nach in der Chemie gängigen Methoden herstellbar.

Die erfindungsgemäße Umsetzung von Salz der ungesättigten organischen Säure der Formel (III) mit einer halogenorganofunktionellen Siliciumverbindung der Formel (II) wird bei Temperaturen von bevorzugt 60 bis 150°C, besonders bevorzugt 70 bis 120°C, durchgeführt.

Das erfindungsgemäße Verfahren wird bei einem Druck von bevorzugt 100 bis 1000 hPa, besonders bevorzugt 200 bis 300hPa, durchgeführt.

Bei dem erfindungsgemäßen Verfahren liegt das molare Verhältnis von Salz der Formel (III) zu halogenorganofunktioneller Siliciumverbindung der Formel (II) zwischen bevorzugt 0,5 und 1,5, besonders bevorzugt zwischen 0,9 und 1,1, insbesondere zwischen 1 und 1,05.

Das erfindungsgemäße Verfahren kann an Luft oder unter einer Inertgasatmosphäre, wobei unter Inertgas ein solches zu verstehen ist, welches gegen die im Reaktionsgemisch enthaltenen Komponenten unter den gegebenen Reaktionsbedingungen unreaktiv ist, wie z.B. unter Stickstoff oder Argon, oder Gemischen davon, durchgeführt werden. Bevorzugt wird das Verfahren unter Inertgasatmosphäre, besonders bevorzugt unter Stickstoffatmosphäre, durchgeführt. Falls erwünscht kann die erfindungsgemäße Umsetzung auch unter einer Stickstoffatmosphäre durchgeführt werden, welche 0,1 bis 2 Prozent Sauerstoff enthält.

Das erfindungsgemäße Verfahren wird bevorzugt unter weitgehendem Ausschluss von Wasserspuren durchgeführt, was durch übliche Verfahren zum Entfernen von Wasserspuren aus den im Reaktionsgefäß vorhandenen Komponenten, wie Trocknen z.B. der organischen Lösungsmittel oder der Inertgasatmosphäre etc. erreicht - werden kann.

Bei dem erfindungsgemäßen Verfahren wird das tertiäre Phosphin in Mengen von bevorzugt 0,1 bis 20 Molprozent, besonders bevorzugt 0,5 bis 10 Molprozent, insbesondere 1 bis 5 Molprozent, jeweils bezogen auf die eingesetzte halogenorganofunktionelle Siliciumverbindung der Formel (II), eingesetzt.

Die erfindungsgemäße Umsetzung der halogenorganofunktionellen Verbindung der Formel (II) mit den Salzen der Formel (III) kann in Anwesenheit oder Abwesenheit von organischem Lösungsmittel durchgeführt werden, wobei die Verwendung von organischem Lösungsmittel, insbesondere die Verwendung von polar-aprotischem Lösungsmittel bevorzugt ist

Falls bei dem erfindungsgemäßen Verfahren organisches Lösungsmittel verwendet wird, handelt es sich um Mengen von bevorzugt 5 bis 300 Gewichtsprozent, besonders bevorzugt 10 bis 100 Gewichtsprozent, insbesondere 20 bis 50 Gewichtsprozent, jeweils bezogen auf die Menge an eingesetzter halogenorganischer Siliciumverbindung der Formel (II).

Beispiele für organische, polar-aprotische Lösungsmittel, die im erfindungsgemäßen Verfahren eingesetzt werden können, sind solche, welche die erfindungsgemäße Reaktion unterstützen, wie etwa Aceton, N,N-Dimethylformamid, Dimethylsulfoxid, N-Methyl-2-pyrrolidon, γ-Butyrolacton, Diethylenglykoldimethylether und Diethylenglykoldiethylether, wobei Aceton, N,N-Dimethylformamid und N-Methyl-2-pyrrolidon bevorzugt sowie N,N-Dimethylformamid besonders bevorzugt sind.

Falls erwünscht, kann das erfindungsgemäße Verfahren in Anwesenheit von Inhibitoren, d.h. Verbindungen, welche die unerwünschte Polymerisation der Zielverbindungen über die ungesättigte organische Funktion verhindern, durchgeführt werden. Bei dem erfindungsgemäßen Verfahren werden Inhibitoren bevorzugt eingesetzt.

Beispiele für Inhibitoren, die bei dem erfindungsgemäßen Verfahren eingesetzt werden können, sind aromatische Amine, Chinone, Hydrochinone, sterisch gehinderte Phenole oder stabile Radikale, wie N,N'-Diphenyl-p-phenylendiamin, N,N'-Di-β-naphthyl-p-phenylendiamin, Phenothiazin, Hydrochinon, Hydrochinonmonomethylether, 2,6-Di-tert-butyl-phenol, 2,6-Di-tert-butyl-4-methyl-phenol, 2,6-Di-tert-butyl-4-(N,N-dimethylamino)methylphenol und 2,2,6,6-Tetramethyl-piperidyl-N-oxid, wobei diese einzel, oder auch als Mischungen eingesetzt werden können.

Falls bei dem erfindungsgemäßen Verfahren Inhibitoren eingesetzt werden, handelt es sich um Mengen von bevorzugt 0,01 bis 1 Gewichts-%, besonders bevorzugt 0,05 bis 0,4 Gewichts-%, jeweils bezogen auf die Menge der eingesetzten halogenorganofunktionalisierten Siliciumverbindung der Formel (II).

Bei dem erfindungsgemäßen Verfahren können außer halogenorganofunktioneller Siliciumverbindungen der Formel (II), Salzen einer ungesättigten organischen Carbonsäure der Formel (III), tertiären Phosphine der Formel (IV), gegebenenfalls polar-aprotischem organischem Lösungsmittel und gegebenenfalls Inhibitor noch weitere, für nukleophile Substitutionsreaktionen übliche Zusatzstoffe eingesetzt werden, wie z.B. Alkalimetalliodide.
Darüberhinaus werden vorzugsweise keine weiteren Stoffe eingesetzt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Verfahren können die eingesetzten Komponenten in beliebiger Reihenfolge miteinander vermischt werden.

Nach Beendigung der erfindungsgemäßen Umsetzung können die erhaltenen ungesättigten, carbonyloxyorganische Gruppen aufweisenden Organosiliciumverbindungen nach an sich bekannten Verfahren isoliert bzw. gereinigt werden, wie z.B. durch Filtration oder Abzentrifugieren des entstehenden Metallhalogenids, Destillation, Rektifikation, Dünnschichtdestillation usw.

Die erhaltenen ungesättigten, carbonyloxyorganische Gruppen ausfweisenden Organosiliciumverbindungen können für alle Zwecke eingesetzt werden, für die auch bisher derartige Verbindungen eingesetzt wurden.

Nach einer bevorzugten Ausführungsform des erfindungsgemäßen Verfahrens werden halogenorganofunktionelle Siliciumverbindungen der Formel (II) mit Salz einer ungesättigten organischen Carbonsäure der Formel (III) in Anwesenheit von tertiären Phosphinen der Formel (IV), polar-aprotischem organischem Lösungsmittel und Inhibitor umgesetzt.

Das erfindungsgemäße Verfahren kann absatzweise oder kontinuierlich durchgeführt werden

Das erfindungsgemäße Verfahren hat den Vorteil, dass es einfach in der Durchführung ist und ungesättigte, carbonyloxyorganische Gruppen aufweisende Organosiliciumverbindungen auf effizientere und kostengünstigere Weise gegenüber dem Stand der Technik hergestellt werden können.

Das erfindungsgemäße Verfahren hat insbesondere den Vorteil, dass durch den Einsatz von tertiären Phosphinen während der Reaktion keine Zersetzungsprodukte gebildet werden, was den Erhalt eines hochreinen Produktes deutlich erleichtert.

Das erfindungsgemäße Verfahren hat darüber hinaus den Vorteil, dass durch den Einsatz von tertiären Phosphinen in Kombination mit dem Einsatz von polar-aprotischen Lösungsmitteln die Zielprodukte der Formel (I) in ungewöhnlich kurzer Zeit unter sehr milden Bedingungen erhalten werden können.

Das erfindungsgemäße Verfahren zeichnet sich des weiteren dadurch aus, dass alle verwendeten Lösungsmittel wiederverwendet werden können, wodurch ein besonders schonender Umgang mit Ressourcen und Umwelt ermöglicht wird.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen. Alle in den Beispielen beschriebenen Umsetzungen wurden unter einer Inertgasatmosphäre, bestehend aus Stickstoff, durchgeführt.

### Beispiel 1

170,7 g (1 Mol) Chlormethyltrimethoxysilan, 6,1 g (0,03 mol) Tri-ⁿbutylphosphin und 0,1 g (0,05 mol-% bezogen auf Silan) Phenothiazin werden bei 90 °C vorgelegt und 130,4 g (1,05 mol) Kaliummethacrylat portionsweise binnen 1 h zugegeben. Nach weiteren 2 h Rühren bei 90 °C ist die Umsetzung vollständig. Nach Filtration vom entstanden Kaliumchlorid wird das Produkt mittels eines Kurzwegverdampfers destilliert, wobei 207,1 g (94 %) Methacryloxymethyltrimethoxysilan mit einer Reinheit von 98,5 % erhalten werden.

### Beispiel 2

Analog Beispiel 1 werden 212,7 g (1 Mol) Chlormethyltriethoxysilan in Gegenwart von 6,1 g (0,03 Mol) Tri-ⁿbutylphosphin und 0,1 g Phenothiazin mit 130,4 g (1,05 Mol) Kaliummethacrylat bei 90 °C umgesetzt. Die Reaktion ist 4 h nach Ende der Kaliummethacrylatdosierung vollständig. Nach Aufarbeitung werden 250,0 g (95 %) Methacryloxymethyltriethoxysilan der Reinheit 99,0 % erhalten werden

### Beispiel 3

Analog Beispiel 1 werden 198,7 g (1 Mol) 3-Chlorpropyltrimethoxysilan in Gegenwart von 6,1 g (0,03 Mol) Tri-ⁿbutylphosphin und 0,1 g Phenothiazin mit 130,4 g (1,05 Mol) Kaliummethacrylat bei 90 °C umgesetzt. Die Reaktion ist 10 h nach Ende der Kaliummethacrylatdosierung vollständig. Nach Aufarbeitung werden 221,0 g (89 %) 3-Methacryloxypropyltrimethoxysilan der Reinheit 98,3 % erhalten.

### Beispiel 4

170,7 g (1 Mol) Chlormethyltrimethoxysilan, 11,1 g (0,03 mol) Tri-ⁿoctylphosphin und 0,1 g (0,05 mol-% bezogen auf Silan) Phenothiazin werden bei 90 °C vorgelegt und 130,4 g (1,05 mol) Kaliummethacrylat portionsweise binnen 1 h zugegeben. Nach weiteren 1 h Rühren bei 90 °C ist die Umsetzung vollständig. Nach Filtration vom entstanden Kaliumchlorid wird das Produkt mittels eines Kurzwegverdampfers destilliert, wobei 209,3 g (95 %) Methacryloxymethyltrimethoxysilan mit einer Reinheit von 98,8 % erhalten werden.

### Beispiel 5

Analog Beispiel 4 werden 212,7 g (1 Mol) Chlormethyltriethoxysilan in Gegenwart von 11,1 g (0,03 Mol) Tri-ⁿbutylphosphin und 0,1 g Phenothiazin mit 130,4 g (1,05 Mol) Kaliummethacrylat bei 90 °C umgesetzt. Die Reaktion ist 3 h nach Ende der Kaliummethacrylatdosierung vollständig. Nach Aufarbeitung werden 244,7 g (93 %) Methacryloxymethyltriethoxysilan der Reinheit 99,2 % erhalten.

### Beispiel 6

Analog Beispiel 1 werden 198,7 g (1 Mol) 3-Chlorpropyltrimethoxysilan in Gegenwart von 6,1 g (0,03 Mol) Tri-ⁿbutylphosphin und 0,1 g Phenothiazin mit 130,4 g (1,05 Mol) Kaliummethacrylat bei 90 °C umgesetzt. Die Reaktion ist 9 h nach Ende der Kaliummethacrylatdosierung vollständig. Nach Aufarbeitung werden 226,0 g (91 %) 3-Methacryloxypropyltrimethoxysilan der Reinheit 98,3 % erhalten.

### Beispiel 7

170,7 g (1 Mol) Chlormethyltrimethoxysilan, 7,9 g (0,03 mol) Triphenylphosphin und 0,1 g (0,05 mol-% bezogen auf Silan) Phenothiazin werden bei 90 °C vorgelegt und 130,4 g (1,05 mol) Kaliummethacrylat portionsweise binnen 1 h zugegeben. Nach weiteren 6 h Rühren bei 90 °C ist die Umsetzung vollständig. Nach Filtration vom entstanden Kaliumchlorid wird das Produkt mittels eines Kurzwegverdampfers destilliert, wobei 193,9 g (95 %) Methacryloxymethyltrimethoxysilan mit einer Reinheit von 98,4 % erhalten werden..

## Patentansprüche

1. Verfahren zur Herstellung ungesättigter, carbonyloxyorganische Gruppen aufweisender Organosilane der allgemeinen Formel
(R¹O) ₃₋ₙR²ₙSi-X-OC (O) C (R³) =CR³₂ (I),
wobei
R¹ gleich oder verschieden sein kann und einen einwertigen, gegebenenfalls substituierten Kohlenwasserstoffrest mit 1 bis 10 Kohlenstoffatomen, der mit Sauerstoffatomen unterbrochen sein kann, bedeutet,
R² gleich oder verschieden sein kann und einen einwertigen, SiC-gebundenen, gegebenenfalls substituierten Kohlenwasserstoffrest mit 1 bis 10 Kohlenstoffatomen, der mit Sauerstoffatomen unterbrochen sein kann, oder Sil(oxan)ylrest bedeutet,
X einen zweiwertigen, gegebenenfalls substituierten Kohlenwasserstoffrest mit 1 bis 40 Kohlenstoffatomen, der mit Sauerstoffatomen unterbrochen sein kann, bedeutet,
R³ gleich oder verschieden sein kann und Wasserstoffatom oder einen einwertigen, gegebenenfalls substituierten Kohlenwasserstoffrest mit 1 bis 40 Kohlenstoffatomen, der mit Sauerstoffatomen unterbrochen sein kann, bedeutet und
n 0, 1, 2 oder 3 ist,
durch Umsetzung von halogenorganofunktionellen Siliciumverbindungen der Formel
(R¹O) ₃₋ₙR²ₙSi-X-Y (II),
wobei R¹, R², X und n die oben angegebenen Bedeutungen haben und Y ein Halogenatom darstellt,
mit Salz einer ungesättigten organischen Carbonsäure der Formel
M⁺ [-OC(O)C(R³)=CR³₂]ₒ (III),
wobei
R³ die obige Bedeutung hat, M Alkali- oder Erdalkalimetallatom bedeutet und o entsprechend der Wertigkeit von M 1 oder 2 sein kann,
in Anwesenheit von zumindest einem tertiären Phosphin der allgemeinen Formel. IV
R⁴₃P (IV),
wobei
R⁴ gleich oder verschieden sein kann und einen einwertigen, gegebenenfalls substituierten Kohlenwasserstoffrest mit 1 bis 20 Kohlenstoffatomen, der mit Sauerstoffatomen und/oder Stickstoffatomen unterbrochen sein kann, bedeutet.

2. Verfahren zur Herstellung ungesättigter, carbonyloxyorganische Gruppen nach Anspruch 1, **dadurch gekennzeichnet, dass** es sich bei den tertiären Phosphinen um Tri-butylphosphin, Tri-octylphosphin oder Triphenylphosphin handeln kann.

3. Verfahren nach Anspruch 1 oder 2, **dadurch gekennzeichnet, dass** das molare Verhältnis von Salz der Formel (III) zu halogenorganofunktioneller Siliciumverbindung der Formel (II) zwischen 0,5 und 1,5 liegt.

4. Verfahren einem oder mehreren der Ansprüche 1 bis 3, **dadurch gekennzeichnet, dass** das Verfahren unter Inertgasatmosphäre durchgeführt wird.

5. Verfahren nach einem oder mehreren der Ansprüche 1 bis 4, **dadurch gekennzeichnet, dass** tertiäre Phosphine in Mengen von 0,5 bis 10 Gewichtsprozent, bezogen auf die Menge der eingesetzten halogenorganofunktionellen Siliciumverbindung der Formel (II), eingesetzt werden.

6. Verfahren nach einem oder mehreren der Ansprüche 1 bis 5, **dadurch gekennzeichnet, dass** als Salz der Formel (III) solches eingesetzt wird, das durch Umsetzung einer wässrigen Lösung eines Metallhydroxids (i) der Formel (VII) M(OH)ₖ, wobei M eine in Anspruch 1 dafür angegebene Bedeutung hat und k abhängig von der Wertgkeit von M 1 oder 2 bedeutet, mit einer ungesättigten organischen Carbonsäure (ii) der Formel
HOC(O)C(R³)=CR³₂ (IV),
wobei R³ die in Anspruch 1 angegebene Bedeutung hat,
in Anwesenheit eines organischen Lösungsmittels (iii), welches mit Wasser ein Azeotrop bildet und welches in flüssiger Form mit Wasser ein Zweiphasen-System bildet,
gefolgt von a) der Entfernung des Wassers durch azeotrope Destillation sowie weiter gefolgt von b) der destillativen Abtrennung von 10 bis 100 Gewichts-% des eingesetzten organischen Lösungsmittels erhalten wird.

7. Verfahren nach einem oder mehreren der Ansprüche 1 bis 6, **dadurch gekennzeichnet, dass** es in Anwesenheit von organischem Lösungsmittel durchgeführt wird.

8. Verfahren nach einem oder mehreren der Ansprüche 1 bis 7, **dadurch gekennzeichnet, dass** halogenorganofunktionelle Siliciumverbindungen der Formel (II) mit Salz einer ungesättigten organischen Carbonsäure der Formel (III) in Anwesenheit von zumindest einem tertiären Phosphin, polar aprotischem organischem Lösungsmittel und Inhibitor umgesetzt werden.

9. Verfahren nach einem oder mehreren der Ansprüche 1 bis 8, **dadurch gekennzeichnet, dass** halogenorganofunktionelle Siliciumverbindungen der Formel (II) mit Salz einer ungesättigten organischen Carbonsäure der Formel (III) in Anwesenheit von zumindest einem tertiären Phosphin, polar aprotischem organischem Lösungsmittel und Inhibitor umgesetzt werden, wobei das Salz der Formel (III) durch Umsetzung einer wässrigen Lösung eines Metallhydroxids (i) der Formel (VII) mit einer ungesättigten organischen Carbonsäure (ii) der Formel (IV) in Anwesenheit eines organischen Lösungsmittels (iii), welches mit Wasser ein Azeotrop bildet und welches in flüssiger Form mit Wasser ein Zweiphasen-System bildet, gefolgt von a) der Entfernung des Wassers durch azeotrope Destillation sowie weiter gefolgt von b) der destillativen Abtrennung von 10 bis 100 Gewichts-% des eingesetzten organischen Lösungsmittels hergestellt wird

## Claims

1. Process for preparing unsaturated organosilanes containing organic carbonyloxy groups and having the general formula
(R¹O) ₃₋ₙR²ₙSi-X-OC (O) C (R³) =CR³₂ (I),
where
R¹ may be identical or different and are each a monovalent, substituted or unsubstituted hydrocarbon radical which has from 1 to 10 carbon atoms and may be interrupted by oxygen atoms,
R² may be identical or different and are each a monovalent, SiC-bonded, substituted or unsubstituted hydrocarbon radical which has from 1 to 10 carbon atoms and may be interrupted by oxygen atoms, or a sil(oxan)yl radical,
X is a divalent, substituted or unsubstituted hydrocarbon radical which has from 1 to 40 carbon atoms and may be interrupted by oxygen atoms,
R³ may be identical or different and are each a hydrogen atom or a monovalent, substituted or unsubstituted hydrocarbon radical which has from 1 to 40 carbon atoms and may be interrupted by oxygen atoms, and
n is 0, 1, 2 or 3,
by reacting haloorganofunctional silicon compounds of the formula
(R¹O)₃₋ₙR²ₙSi-X-Y (II),
where R¹, R², X and n are as defined above and Y is a halogen atom,
with a salt of an unsaturated organic carboxylic acid of the formula
M⁺ [-OC (O) C (R³) =CR³₂]ₒ (III),
where
R³ is as defined above, M is an alkali metal atom or alkaline earth metal atom and o can be 1 or 2 depending on the valence of M,
in the presence of at least one tertiary phosphine of the general formula IV
R⁴₃P (IV)
where
the radicals R⁴ may be identical or different and are each a monovalent, substituted or unsubstituted hydrocarbon radical which has from 1 to 20 carbon atoms and may be interrupted by oxygen atoms and/or nitrogen atoms.

2. Process for preparing unsaturated organic carbonyloxy groups according to claim 1,
**characterized in that** the tertiary phosphines can be tributylphosphine, trioctylphosphine or triphenylphosphine.

3. Process according to claim 1 or 2, **characterized in that** the molar ratio of the salt of the formula (III) to the haloorganofunctional silicon compound of the formula (II) is from 0.5 to 1.5.

4. Process according to one or more of claims 1 to 3, **characterized in that** the process is carried out under an inert gas atmosphere.

5. Process according to one or more of claims 1 to 4, **characterized in that** tertiary phosphines are used in an amount of from 0.5 to 10 percent by weight, based on the amount of the haloorganofunctional silicon compound of the formula (II) used.

6. Process according to one or more of claims 1 to 5, **characterized in that** the salt of the formula (III) which is used is obtained by reacting an aqueous solution of a metal hydroxide (i) of the formula (VII) M(OH)ₖ, where M is as defined in claim 1 and k is 1 or 2 depending on the valence of M, with an unsaturated organic carboxylic acid (ii) of the formula
HOC (O) C (R³) =CR³₂ (IV),
where R³ is as defined in claim 1,
in the presence of an organic solvent (iii) which forms an azeotrope with water and forms a two-phase system with water in the liquid state, followed by a) removing the water by azeotropic distillation and additionally followed by b) separating off from 10 to 100% by weight of the organic solvent used by distillation.

7. Process according to one or more of claims 1 to 6, **characterized in that** it is carried out in the presence of an organic solvent.

8. Process according to one or more of claims 1 to 7, **characterized in that** haloorganofunctional silicon compounds of the formula (II) are reacted with a salt of an unsaturated organic carboxylic acid of the formula (III) in the presence of at least one tertiary phosphine, a polar aprotic organic solvent and an inhibitor.

9. Process according to one or more of claims 1 to 8, **characterized in that** haloorganofunctional silicon compounds of the formula (II) are reacted with a salt of an unsaturated organic carboxylic acid of the formula (III) in the presence of at least one tertiary phosphine, a polar aprotic organic solvent and an inhibitor, where the salt of the formula (III) is prepared by reacting an aqueous solution of a metal hydroxide (i) of the formula (VII) with an unsaturated organic carboxylic acid (ii) of the formula (IV) in the presence of an organic solvent (iii) which forms an azeotrope with water and forms a two-phase system with water in the liquid state, followed by a) removing the water by azeotropic distillation and additionally followed by b) separating off from 10 to 100% by weight of the organic solvent used by distillation.

## Revendications

1. Procédé pour la préparation d'organosilanes insaturés comportant des groupes carbonyloxyorganiques, de formule générale
(R¹O) ₃₋ₙR²ₙSi-X-OC(O)C(R³)=CR³₂ (I),
dans laquelle
R¹ peut être le même ou différent et représente un radical hydrocarboné monovalent, éventuellement substitué, ayant de 1 à 10 atomes de carbone, qui peut être interrompu par des atomes d'oxygène,
R² peut être le même ou différent et représente un radical hydrocarboné monovalent, lié au silicium, éventuellement substitué, ayant de 1 à 10 atomes de carbone, qui peut être interrompu par des atomes d'oxygène, ou un radical sil(oxan)yle,
X représente un radical hydrocarboné divalent, éventuellement substitué, ayant de 1 à 40 atomes de carbone, qui peut être interrompu par des atomes d'oxygène,
R³ peut être le même ou différent et représente un atome d'hydrogène ou un radical hydrocarboné monovalent, éventuellement substitué, ayant de 1 à 40 atomes de carbone, qui peut être interrompu par des atomes d'oxygène, et
n est 0, 1, 2 ou 3,
par mise en réaction de composés siliciés halogéno-organofonctionnels, de formule
(R¹O) ₃₋ₙR²ₙSi-X-Y (II),
dans laquelle R¹, R², X et n ont les significations données ci-dessus et
Y représente un atome d'halogène,
avec un sel d'un acide carboxylique insaturé de formule
M⁺ [⁻OC(O)C(R³)=CR³₂]ₒ (III),
dans laquelle
R³ a la signification donnée plus haut, M représente un atome de métal alcalin ou alcalino-terreux, et o peut être 1 ou 2 en fonction de la valence de M,
en présence d'au moins une phosphine tertiaire de formule générale IV
R⁴₃P (IV) ;
dans laquelle
R⁴ peut être le même ou différent, et représente un radical hydrocarboné monovalent, éventuellement substitué, ayant de 1 à 20 atomes de carbone, qui peut être interrompu par des atomes d'oxygène et/ou des atomes d'azote.

2. Procédé pour la préparation de groupes carbonyloxyorganiques insaturés selon la revendication 1, **caractérisé en ce que** les phosphines tertiaires peuvent consister en tributylphosphine, trioctylphosphine ou triphénylphosphine.

3. Procédé selon la revendication 1 ou 2, **caractérisé en ce que** le rapport molaire du sel de formule (III) au composé silicié halogéno-organofonctionnel de formule (II) est compris entre 0,5 et 1,5.

4. Procédé selon une ou plusieurs des revendications 1 à 3, **caractérisé en ce que** le procédé est effectué sous atmosphère de gaz inerte.

5. Procédé selon une ou plusieurs des revendications 1 à 4, **caractérisé en ce qu'**on utilise les phosphines tertiaires en des quantités de 0,5 à 10 % en poids, par rapport à la quantité du composé halogéno-organofonctionnel de formule (II) utilisé.

6. Procédé selon une ou plusieurs des revendications 1 à 5, **caractérisé en ce qu'**on utilise en tant que sel de formule (III) un tel sel qui est obtenu par mise en réaction d'une solution aqueuse d'un hydroxyde de métal (i) de formule (VII) M(OH)ₖ, où M a une définition indiquée pour ce symbole dans la revendication 1 et k représente 1 ou 2 en fonction de la valence de M, avec un acide carboxylique organique insaturé (ii) de formule
HOC (O) C (R³) =CR³₂ (IV),
R³ ayant la signification indiquée dans la revendication 1,
en présence d'un solvant organique (iii) qui forme un azéotrope avec l'eau et qui à l'état liquide forme avec l'eau un système en deux phases, suivie de a) l'élimination de l'eau par distillation azéotropique ainsi qu'encore suivie de b) la séparation par distillation de 10 à 100 % en poids du solvant organique utilisé.

7. Procédé selon une ou plusieurs des revendications 1 à 6, **caractérisé en ce qu'**il est effectué en présence d'un solvant organique.

8. Procédé selon une ou plusieurs des revendications 1 à 7, **caractérisé en ce qu'**on fait réagir des composés siliciés halogéno-organofonctionnels de formule (II) avec un sel d'un acide carboxylique organique insaturé de formule (III) en présence d'au moins une phosphine tertiaire, un solvant organique aprotique polaire et un inhibiteur.

9. Procédé selon une ou plusieurs des revendications 1 à 8, **caractérisé en ce qu'**on fait réagir des composés siliciés halogéno-organofonctionnels de formule (II) avec un sel d'un acide carboxylique organique insaturé de formule (III) en présence d'au moins une phosphine tertiaire, un solvant organique aprotique polaire et un inhibiteur, le sel de formule (III) étant obtenu par mise en réaction d'une solution aqueuse d'un hydroxyde de métal (i) de formule (VII) avec un acide carboxylique organique insaturé (ii) de formule (IV), en présence d'un solvant organique (iii) qui forme un azéotrope avec l'eau et qui à l'état liquide forme avec l'eau un système en deux phases, suivie de a) l'élimination de l'eau par distillation azéotropique ainsi qu'encore suivie de b) la séparation par distillation de 10 à 100 % en poids du solvant organique utilisé.
